# EUROPÄISCHE PATENTANMELDUNG

(11) **EP 0 822 208 A1**
(43) Veröffentlichungstag der Anmeldung: **04.02.1998**
(21) Anmeldenummer: 97112333.6
(22) Anmeldetag: 18.07.1997
(51) Int. Cl.: C08G 18/48, C08G 18/50

(54) **Verfahren zur Herstellung von Polyurethanen mit verbesserter Aushärtung**

(30) Priorität: 31.07.1996 DE 19630787
(71) Anmelder: BASF AKTIENGESELLSCHAFT, 67056 Ludwigshafen (DE)
(72) Erfinder: Guettes, Bernd, 03238 Sallgast (DE); Dinsch, Stefan, 01993 Schipkau (DE); Knorr, Gottried, Dr., 01987 Schwarzheide (DE); Seifert, Holger, Dr., 49448 Hüde (DE)

(57) **Zusammenfassung**

Die Erfindung betrifft ein Verfahren zur Herstellung von Polyurethanen mit verbesserter Aushärtung durch Umsetzung von
a) organischen und/oder modifizierten organischen Di- und/oder Polyisocyanaten mit
b) Polyetherpolyolen auf Basis aromatischer Amine, herstellbar durch Umsetzung spezieller Aminkombinationen und gegebenenfalls weiterer Koinitiatoren in einer stufenweisen Alkylenoxidanlagerung, sowie gegebenenfalls weiteren höhermolekularen Verbindungen mit mindestens zwei reaktiven Wasserstoffatomen und gegebenenfalls
c) niedermolekularen Kettenverlängerungs- und/oder Vernetzungsmitteln
in Gegenwart von
d) Treibmitteln,
e) Katalysatoren sowie gegebenenfalls
f) weiteren Hilfsmitteln und/oder Zusatzstoffen,
dadurch gekennzeichnet, daß als spezielle Aminkombination ein Gemisch von Aminen der Diphenylmethanreihe, bestehend aus 5 bis 20 Gew.-% 4-Kern-Amin, 15 bis 30 Gew.-% 3-Kern-Amin, 20 bis 35 Gew.-% Aminen mit mehr als 4 Kernen und 25 bis 50 Gew.-% 2-Kern-Amin, wobei sich die Anteile auf 100 Gew.-% ergänzen, in Kombination mit weiteren aromatischen Aminen eingesetzt wird.

## Beschreibung

Die Erfindung betrifft Verfahren zur Herstellung von Polyurethanen mit verbesserter Aushärtung durch Umsetzung von organischen und/oder modifizierten organischen Di- und/oder Polyisocyanaten mit Polyetherpolyolen auf Basis aromatischer Amine, herstellbar durch Umsetzung spezieller Aminkombinationen und gegebenenfalls weiterer Koinitiatoren in einer stufenweisen Alkylenoxidanlagerung, sowie gegebenenfalls weiteren höhermolekularen Verbindung mit mindestens zwei reaktiven Wasserstoffatomen und weiteren üblichen Hilfsmitteln und/oder Zusatzstoffen.

Die Herstellung von Polyurethanen durch Umsetzung von NCO-haltigen Verbindungen, insbesondere organischen Polyisocyanaten und/oder modifizierten organischen Polyisocyanaten bzw. Prepolymeren auf Basis von organischen Isocyanaten mit höher funktionellen Verbindungen mit mindestens zwei reaktiven Wasserstoffatomen, beispielsweise Polyoxyalkylenpolyaminen und/oder vorzugsweise organischen Polyhydroxylverbindungen ist vielfach beschrieben worden. Als Polyhydroxylverbindungen werden in Abhängigkeit von dem beabsichtigen Anwendungsgebiet der fertigen Polyurethane vorzugsweise Polyether- und/oder Polyesterole unterschiedlicher Zusammensetzung und mit unterschiedlichen Molekulargewichte eingesetzt und unter Mitverwendung der üblichen Zusatzstoffe, wie Kettenverlängerungs- und/oder Vernetzungsmitteln, Katalysatoren, Treibmitteln und weiteren Hilfsmitteln, mit den Isocyanaten zu Polyurethanen umgesetzt. Eine Zusammenfassende Übersicht über die Herstellung von Polyurethanen wird z.B. im Kunststoff-Handbuch, Band VII, "Polyurethane", 1. Auflage 1966, herausgegeben von Dr. R. Vieweg und Dr. A. Höchtlen und 2. Auflage, 1983, sowie 3. Auflage, 1993, herausgegeben von Dr. G. Oertel, (Carl Hanser Verlag, München) gegeben.

Als Polyolkomponenten für insbesondere harte Polyurethanschäume werden Polyetherole auf Basis von hochfunktionellen Alkoholen, Zuckeralkoholen und/oder Sacchariden verwendet. Neben diesen, die Vernetzung in der Polyurethan-Matrix verbessernden Polyetherolen, werden zur Verbesserung der Aushärtung Aminpolyetherole auf Basis aliphatischer Amine, wie Ethylendiamin, Diethylentriamin oder auch Triethylentetramin, wie in DD-B-235 878 beschrieben, eingesetzt. Nachteile der Verwendung von aliphatischen Aminpolyetherolen liegen in der begrenzten Anwendungsmöglichkeit auf nur bestimmte Hartschaumtypen wegen der teilweise schlechten Mischbarkeit in den Systemkomponenten und fehlenden Wirkungen bezüglich der Thermostabilität.

Deshalb werden insbesondere für Isolierschäume, bei denen eine Verbesserung der Zellstrukturen (kleinere Zellen) angestrebt wird, verstärkt aromatische Aminpolyetherole auf Basis aromatischer Amine, wie Anilin, Methylendianilin, Toluylendiamin und durch säure Anilin/Formaldehydkondensation entstandene Polyamine bzw. Polyamingemische, eingesetzt und diese einzeln oder im Gemisch mit Koinitiatoren, wie weiteren Aminen, Aminoalkoholen bzw. Alkoholen oder auch Polyetheralkoholen, mit niederen Alkylenoxiden zur Umsetzung gebracht. Das z.B. in der DD-A-232 714 dargestellte Verfahren zur Herstellung von Aminpolyetherolen unter Einsatz spezieller Abfallanilingemische hat den Nachteil der ungenügenden Reproduzierbarkeit der Polyetherolkennzahlen und ist von daher im Einsatz äußerst eingeschränkt und für die Herstellung hochwertiger Hartschäume ungeeignet. Übliche Wege werden auch in der US-A-3 159 591 bzw. der DE-A-15 69 497 beschrieben. Es werden Polyetherole auf Basis von Polyamingemischen der MDA-Reihe gerneinsam mit höherfunktionellen Polyolen zu Polyurethanschaumstoffen umgesetzt. Problematisch stellt sich bei diesen Anwendungen der unterschiedliche Gehalt an freien Aminogruppen dar. Diese Gehaltsschwankungen bringen Störungen in der Katalyse, Aushärtung und Vernetzung der Polyurethanschäume. Ein weiterer Nachteil ist auch die hohe Viskosität der Polyetherole und die damit schlechte maschinelle Verarbeitbarkeit.

Der vorliegenden Erfindung lag die Aufgabe zugrunde, ein Verfahren zur Herstellung von Polyurethanen, insbesondere Polyurethanhartschaumstoffen, mit verbesserter Aushärtung auf Basis organischer, insbesondere aromatischer Isocyanate und unter Einsatz von OH-funktionellen aromatischen Aminpolyetherpolyolen unter Vermeidung von freien Aminogruppen aufzuzeigen, das eine für die Anwendung in Polyurethanen optimale Molekulargewichts- bzw. Kettenlängenverteilung bei niedrigen Viskositäten gewährleistet.

Diese Aufgabe wurde erfindungsgemäß dadurch gelöst, daß bei der Herstellung der Polyurethane Polyetherpolyole auf Basis aromatischer Amine, herstellbar durch Umsetzung spezieller Aminkombinationen und gegebenenfalls weiterer Koinitiatoren in einer stufenweisen Alkylenoxidanlagerung, sowie gegebenenfalls weitere höhermolekulare Verbindungen mit mindestens zwei reaktiven Wasserstoffatomen eingesetzt werden, wobei die spezielle Aminkombination ein Gemisch von Aminen der Diphenylmethanreihe in Kombination mit weiteren aromatischen Aminen ist.

Gegenstand der Erfindung ist demzufolge ein Verfahren zur Herstellung von Polyurethanen mit verbesserter Aushärtung durch Umsetzung von
a) organischen und/oder modifizierten organischen Di- und/oder Polyisocyanaten mit
b) Polyetherpolyolen auf Basis aromatischer Amine, herstellbar durch Umsetzung spezieller Aminkombinationen und gegebenenfalls weiterer Koinitiatoren in einer stufenweisen Alkylenoxidanlagerung, sowie gegebenenfalls weiteren höhermolekularen Verbindungen mit mindestens zwei reaktiven Wasserstoffatomen und gegebenenfalls
c) niedermolekularen Kettenverlängerungs- und/oder Vernetzungsmitteln
in Gegenwart von
d) Treibmitteln,
e) Katalysatoren sowie gegebenenfalls
f) weiteren Hilfsmitteln und/oder Zusatzstoffen,
das dadurch gekennzeichnet ist, daß als spezielle Aminkombination ein Gemisch von Aminen der Diphenylmethanreihe, bestehend aus 5 bis 20 Gew.-% 4-Kern-Amin, 15 bis 30 Gew.-% 3-Kern-Amin, 20 bis 35 Gew.-% Aminen mit mehr als 4 Kernen und 25 bis 50 Gew.-% 2-Kern-Amin, wobei sich die Anteile auf 100 Gew.-% ergänzen, in Kombination mit weiteren aromatischen Aminen eingesetzt wird.

Gegenstand der Erfindung ist weiterhin die Verwendung dieser Polyurethane als Isolationsmaterial im Bau- und Kühlmöbelsektor.

Besonders bewährt haben sich für die Herstellung der einzusetzenden Polyetherpolyole Aminkombinationen, enthaltend erfindungsgemäß ein Gemisch von Aminen der Diphenylmethanreihe, das aus 5 bis 15 Gew.-% 4-Kern-Amin, 15 bis 25 Gew.-% 3-Kern-Amin, 20 bis 30 Gew.-% Aminen mit mehr als 4 Kernen und 40 bis 50 Gew.-% 2-Kern-Amin, wobei sich die Anteile auf 100 Gew.-% ergänzen, besteht.

Als weitere aromatischen Amine, die in Kombination mit dem Gemisch von Aminen der Diphenylmethanreihe eingesetzt werden, werden Anilin, Aminobenzylanilin, Toluidin und/oder Toluylendiamin bevorzugt. Verwendung können aber auch Derivate der genannten aromatischen Amine , insbesondere Alkoxylierungsprodukte z.B. von Anilin, Toluylendiamin und/oder Aminen der Diphenylmethanreihe, finden.

Die weiteren aromatischen Amine werden in einer Menge von 0,01 bis 20 Gew.-%, vorzugsweise in einer Menge von 0,1 bis 10 Gew.-%, bezogen auf das Gewicht des verwendeten Gemisches von Aminen der Diphenylmethanreihe, eingesetzt.

Die speziellen Aminkombinationen werden, gegebenenfalls im Beisein weiterer Koinitiatoren, in einer stufenweisen basisch katalysierten Alkylenoxidanlagerung zu Polyetherpolyolen umgesetzt.

Als Koinitiatoren kommen üblicherweise OH-funktionelle Verbindungen und/oder aliphatische Aminverbindungen in einem Anteil von weniger als 70 Gew.-% in Frage, wie beispielsweise 2-, 3- und höherfunktionelle Alkohole, Zuckeralkohole, Saccharide und/oder Ammoniak bzw. daraus hergestellte Alkanolamine, Ethylendiamin, Diethylentriamin, Triethylentetramin und Alkoxylierungsprodukte dieser Koinitiatoren sowie Gemische dieser Verbindungen, aber auch weitere aromatische Amine, deren Gemische mit aliphatischen Aminen und/oder Hydroxylgruppen aufweisenden Verbindungen, ihre Alkoxylate und/oder Gemische von Alkoxylaten, bevorzugt werden Hydroxylgruppen tragende Verbindungen, wie Glykole, Triole und höherfunktionelle Verbindungen, beispielsweise Pentaerythrit, Sorbit und Saccharose sowie Alkoxylate aus ihnen und Gemische aus diesen Verbindungen.

Als Alkylenoxide kommen insbesondere Ethylenoxid und/oder Propylenoxid, aber auch Butylenoxid, Tetrahydrofuran und/oder Styroloxid in Frage.

Als Katalysatoren für die basisch katalysierte Alkylenoxidanlagerung werden die hierfür üblicherweise eingesetzten Verbindungen, insbesondere Alkali- und Erdalkalihydroxide, vorzugsweise KOH und NaOH, oder tertiäre Amine, eingesetzt.

Die Zusammensetzung des einzusetzenden Gemisches aus spezieller Aminkombination und Koinitiatoren wird auf die Art und Menge der verwendeten Alkylenoxide abgestimmt. Damit kann ein ausgewogenes Verhältnis von Variation der Funktionalitäten und der Molekulargewichte in Bezug auf die Viskosität erreicht werden. Die Optimierung der Verhältnisse der einzelnen Alkylenoxide trägt ebenfalls zu einer möglichen Minimierung der Viskosität bei.

Die Anlagerung der Alkylenoxide, insbesondere von Ethylenoxid und/oder Propylenoxid, erfolgt einzeln, blockweise oder in statistischer Alkylenoxidgemisch-Anlagerung. Ausgehend vom benötigten Molekulargewicht wird in der Regel ein Polyol mit hohen Anteilen an sekundären OH-Gruppen synthetisiert.

Die Alkylenoxidanlagerung erfolgt erfindungsgemäß in zwei oder mehr Stufen, insbesondere bevorzugt unter Einsatz jeweils steigender Katalysatormengen. Dabei wird vorzugsweise in der ersten Stufe ohne oder mit geringen Mengen an Katalysator von kleiner als 0,05 Gew.-% und in den folgenden Stufen mit Katalysatormengen von 0,05 bis 0,5 Gew.-%, jeweils berechnet als KOH im Fertigpolyether, gearbeitet.

Ausgehend vom vorgelegten Startergemisch werden Katalysatormengen von 0 bis 0,05 Gew.-% zugegeben, um besonders die selektive Alkoxylierung am Stickstoff der Aminogruppen ablaufen zu lassen. Mit dem Kettenwachstum und der nahezu ausschließlichen Bildung von OH-Gruppen werden für die zweite und ggf. weitere Stufen Katalysatormengen von 0,05 bis 0,5 Gew.-% eingesetzt.

Vorzugsweise erfolgt in der ersten Stufe der Einsatz von Ethylenoxid, Propylenoxid oder Ethylenoxid/Propylenoxid-Gemischen, während in den weiteren Stufen vorrangig Propylenoxid, Ethylenoxid/Propylenoxid-Gemische oder Butylenoxid, auch im Gemisch, dosiert werden, um entsprechend den gewünschten Molekulargewichten hohe Konzentrationen an sekundären OH-Gruppen zu erhalten.

In der ersten Stufe werden üblicherweise, bezogen auf die mittlere Funktionalität des Startergemisches, Alkylenoxid-Äquivalente im Verhältnis von 0,5 bis 2, bevorzugt 0,8 bis 1,5, zugegeben.

In einer bevorzugten Ausführungsform wird die Umsetzung derart durchgeführt, daß in einer ersten Stufe das gesamte Startergemisch oder ein Teil des Startergemisches aus spezieller Aminkombination und ggf. Koinitiator ohne bzw. mit einer geringen Menge an katalytischen Substanzen von <0,05 Gew.-%, berechnet als KOH im Fertigpolyether, mit einer Teilmenge an Alkylenoxid umgesetzt wird. Danach werden ggf. leichtflüchtige Bestandteile entfernt. Anschließend wird der Restteil des Startergemisches zugesetzt. Dieses sogenannte Vorpolymerengemisch wird dann mit katalytischen Substanzen in üblichen Konzentrationen, insbesondere von 0,05 bis 0,5 Gew.-%, berechnet als KOH im Fertigpolyether, versetzt und mit weiteren Alkylenoxid-Mengen bei den üblichen Bedingungen der anionischen Alkylenoxid-Polymerisation, insbesondere bei Temperaturen von 80°C bis 130°C und Drücken von 0,1 bis 1,0 MPa, bis zur Erreichung der für die Anwendung notwendigen Molekulargewichte umgesetzt. Diese stufenweise Umsetzung kann auch drei- oder mehrstufig mit jeweils steigenden Katalysatormengen durchgeführt werden.

Der Katalysator wird nach Abschluß der Polyetherolsynthese üblicherweise durch Säureneutralisation, Vakuumdestillation und Filtration entfernt.

Die derart hergestellten OH-funktionellen Aminpolyetheralkoholgemische werden, ggf. in Kombination mit weiteren höhermolekularen Verbindungen mit mindestens zwei reaktiven Wasserstoffatomen, mit den weiteren Komponenten zu Polyurethanen, insbesondere Polyurethanhartschaumstoffen, umgesetzt.

Zur Herstellung der Polyurethane nach dem erfindungsgemäßen Verfahren finden, mit Ausnahme der erfindungsgemäß hergestellten OH-funktionellen Aminpolyetheralkoholgemische, die an sich bekannten Aufbaukomponenten Verwendung, zu denen im einzelnen folgendes auszuführen ist.
a) Als organische und/oder modifizierte organische Di- und/oder Polyisocyanate (a) kommen die an sich bekannten aliphatischen, cycloaliphatischen, araliphatischen und vorzugsweise die aromatischen mehrwertigen Isocyanate in Frage.
   Im einzelnen seien beispielhaft genannt: Alkylendiisocyanate mit 4 bis 12 Kohlenstoffatomen im Alkylenrest, wie 1,12-Dodecandiioscyanat, 2-Ethyl-tetramethylendiisocyanat-1,4, 2-Methylpentamethylendiisocyanat-1,5, Tetramethylendiisocyanat-1,4, und vorzugsweise Hexamethylendiisocyanat-1,6; cycloaliphatische Diisocyanate wie Cyclohexan-1,3- und 1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Di- und Polyisocyanate, wie z.B. 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 2,4'-, 2,4'- und 2,2'-Diphenylmethandiisocyanaten und Polyphenylpoiymethylenpolyisocyanaten (Roh-MDI) und Mischungen aus Roh-MDI und Toluylendiisocyanaten. Die organischen Di- und Polyisocyanate können einzeln oder in Form ihrer Mischungen eingesetzt werden.
   Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, modifiziertes 4,4'-Diphenylmethandiisocyanat, modifizierte 4,4'- und 2,4'-Diphenylmethandiisocyanatmischungen, modifiziertes Roh-MDI oder 2,4- bzw. 2,6-Toluylendiisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylenpolyoxyethenglykole, -triole und/oder -tetrole. Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus den nachfolgend beschriebenen Polyester- und/oder vorzugsweise Polyetherpolyolen und 4,4'-Diphenylmethandiisocyanat, Mischungen aus 2,4'- und 4,4'-Diphenylmethandiisocyanat, 2,4- und/oder 2,6-Toluylendiisocyanaten oder Roh-MDI. Bewährt haben sich ferner flüssige, Carbodiiimidgruppen und/oder Isocyanuratringe enthaltende Polyisocyanate mit NCO-Gehalten von 33,6 bis 15, vorzugsweise 31 bis 21 Gew.-%, bezogen auf das Gesamtgewicht, z.B. auf Basis von 4,4'-, 2,4'- und/oder 2,2'-Diphenylmethandiisocyanat und/oder 2,4- und/oder 2,6-Toluylendiisocyanat.
   Die modifizierten Polyisocyanate können miteinander oder mit unmodifizierten organischen Polyisocyanaten wie z.B. 2,4'-, 4,4'-Diphenylmethandiisocyanat, Roh-MDI, 2,4- und/oder 2,6-Toluylendiisocyanat gegebenenfalls gemischt werden.
   Besonders bewährt haben sich als organische Polyisocyanate und kommen daher vorzugsweise zur Anwendung: Mischungen aus Toluylendiisocyanaten und Roh-MDI oder Mischungen aus modifizierten, Urethangruppen enthaltenden organischen Polyisocyanaten mit einem NCO-Gehalt von 33,6 bis 15 Gew.-%, insbesondere solche auf Basis von Toluylendiisocyanaten, 4,4'-Diphenylmethandiisocyanat, Diphenylmethandiisocyanat-Isomerengemischen oder Roh-MDI und insbesondere Roh-MDI mit einem Diphenylmethandiisocyanat-Isomerengehalt 30 bis 80 Gew.-%, vorzugsweise von 30 bis 60 Gew.-%, insbesondere von 30 bis 55 Gew.-%.
b) Als erfindungsgemäß einzusetzende Polyetherpolyole auf Basis aromatischer Amine werden solche, herstellbar durch Umsetzung spezieller Aminkombinationen und gegebenenfalls weiterer Koinitiatoren in einer stufenweisen Alkylenoxidanlagerung, wie weiter oben beschrieben, verwendet. Daneben können weitere höhermolekulare Verbindungen mit mindestens zwei reaktiven Wasserstoffatomen in einer Menge von bis zu 70 Gew.-%, vorzugsweise 20 bis 50 Gew.-%, bezogen auf das Gewicht der Komponente (b), mitverwendet werden.
   Als weitere höhermolekulare Verbindungen mit mindestens zwei reaktiven Wasserstoffatomen werden zweckmäßigerweise solche mit einer Funktionalität von 2 bis 8, vorzugsweise 2 bis 6, und einem Molekulargewicht von 300 bis 8000, vorzugsweise von 300 bis 3000, verwendet. Der Einsatz hängt von den gewünschten Eigenschaften des herzustellenden Polyurethans ab. Bewährt haben sich z.B. Polyether-polyamine und/oder vorzugsweise Polyole ausgewählt aus der Gruppe der Polyetherpolyole, Polyesterpolyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyesterpolyole und/oder Polyetherpolyole. Der Hydroxylzahl der Polyhydroxylverbindungen beträgt dabei in aller Regel 150 bis 850 mg KOH/g und vorzugsweise 200 bis 600 mg KOH/g.
   Insbesondere als Polyole verwendet werden Polyetherpolyole, die nach bekannten Verfahren, beispielsweise durch anionische Polymerisation mit Alkalihydroxiden, wie z. B. Natrium- oder Kaliumhydroxid oder Alkalialkoholaten, wie z. B. Natriummethylat, Natrium- oder Kaliumethylat oder Kaliumisopropylat, als Katalysatoren und unter Zusatz mindestens eines Startermoleküls, das 2 bis 8, vorzugsweise 2 bis 6, reaktive Wasserstoffatome gebunden enthält, oder durch kationische Polymerisation mit Lewis-Säuren, wie Antimonpentachlorid, Borfluorid-Etherat u.a. oder Bleicherde, als Katalysatoren aus einem oder mehreren Alkylenoxiden mit 2 bis 4 Kohlenstoffatomen im Alkylenrest hergestellt werden.
   Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.
   Als Startermoleküle kommen ferner in Betracht: Alkanolamine, wie z.B. Ethanolamin, N-Methyl- und N-Ethyl-ethanolamin, Dialkanolamine, wie z.B. Diethanolamin, N-Methyl- und N-Ethyl-diethanolamin, und Trialkanolamine, wie z.B. Triethanolamin, und Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylolpropan, Pentaerythrit, Sorbit und Saccharose.
   Vorzugsweise eingesetzt werden, insbesondere für die Herstellung von Polyurethanhartschaumstoffen, Saccharosepolyetherole, Sorbitpolyetherole und Glykolpolyetherole.
   Die Polyetherpolyole besitzen eine Funktionalität von vorzugsweise 2 bis 6 und insbesondere 2 bis 4 und Molekulargewichte von 300 bis 3000, vorzugsweise 300 bis 2000 und insbesondere 400 bis 2000.
   Als Polyetherpolyole eignen sich ferner polymermodifizierte Polyetherpolyole, vorzugsweise Pfropfpolyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyetherpolyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyetherpolyoldispersionen, die als disperse Phase, üblicherweise in einer Menge von 1 bis 50 Gew.%, vorzugsweise 2 bis 25 Gew.%, enthalten: z.B. Polyharnstoffe, Polyhydrazide, tert.-Aminogruppen gebunden enthaltende Polyurethane und/oder Melamin und die z.B. beschrieben werden in der EP-B-011 752 (US 4 304 708) , US-A-4 374 209 und DE-A-32 31 497.
   Die Polyetherpolyole können einzeln oder in Form von Mischungen mitverwendet werden. Ferner können sie mit den Pfropfpolyetherpolyolen oder Polyesterpolyolen sowie den hydroxylgruppenhaltigen Polyesteramiden, Polyacetalen, Polycarbonaten und/oder Polyetherpolyaminen gemischt werden.
   Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei-und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton oder Hydroxycarbonsäuren, z.B. ω-Hydroxycapronsäure.
   Zur Herstellung der Polyesterpolyole können die organischen, z.B. aromatischen und vorzugsweise aliphatischen, Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a., in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.
   Zur Herstellung der Polyesterpolyole werden die organischen Polycarbonsäuren und/oder -derivate und mehrwertigen Alkohole vorteilhafterweise im Molverhältnis von 1:1 bis 1,8, vorzugsweise 1:1,05 bis 1,2, polykondensiert.
   Die erhaltenen Polyesterpolyole besitzen vorzugsweise eine Funktionalität von 2 bis 4, insbesondere 2 bis 3, und ein Molekulargewicht von 480 bis 3000, vorzugsweise 600 bis 2000 und insbesondere 600 bis 1500.
   Die Polyesterpolyole können einzeln oder in Form von Mischungen mitverwendet werden. Auch sie können ebenso wie die Polyetherpolyole mit den nachstehend aufgeführten weiteren H-funktionellen Verbindungen gemischt werden.
   Als hydroxylgruppenhaltige Polyacetale kommen z.B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.
   Als Hydroxylgruppen aufweisende Polycarbonate kommen solche der an sich bekannten Art in Betracht, die beispielsweise durch Umsetzung von Diolen, wie Propandiol-1,3, Butandiol-1,4 und/oder Hexandiol-1,6, Diethylenglykol, Triethylenglykol oder Tetraethylenglykol mit Diarylcarbonaten, z.B. Diphenylcarbonat, oder Phosgen hergestellt werden können.
   Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.
   Geeignete Polyetherpolyamine können aus den obengenannten Polyetherpolyolen nach bekannten Verfahren hergestellt werden. Beispielhaft genannt seien die Cyanoalkylierung von Polyoxyalkylen-polyolen und anschließende Hydrierung des gebildeten Nitrils (US 3 267 050) oder die teilweise oder vollständige Aminierung von Polyoxyalkylenpolyolen mit Aminen oder Ammoniak in Gegenwart von Wasserstoff und Katalysatoren (DE 12 15 373).
c) Die Polyurethane, insbesondere Polyurethanhartschaumstoffe, können ohne oder unter Mitverwendung von Kettenverlängerungs- und/oder Vernetzungsmitteln (c) hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden Diole und/oder Triole mit Molekulargewichten kleiner als 400, vorzugsweise von 60 bis 300. In Betracht kommen beispielsweise aliphatische, cycloaliphatische und/ oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.
   Sofern zur Herstellung der Polyurethane Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 8 Gew.-%, bezogen auf das Gewicht der Komponente (b) zum Einsatz.
d) Zu Treibmitteln, welche insbesondere zur Herstellung der Polyurethanhartschaumstoffe verwendet werden, gehören vorzugsweise Wasser, das mit Isocyanatgruppen unter Bildung von Kohlendioxid reagiert, und/oder physikalisch wirkende Treibmittel. Geeignet sind Flüssigkeiten, welche gegenüber den organischen, gegebenenfalls modifizierten Polyisocyanaten inert sind und Siedepunkte unter 100°C, vorzugsweise unter 50°C, insbesondere zwischen -50°C und 30°C bei Atmosphärendruck aufweisen, so daß sie unter dem Einfluß der exothermen Polyadditionsreaktion verdampfen. Beispiele derartiger, vorzugsweise verwendbarer Flüssigkeiten sind Alkane, wie Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlordifluorethane, 1,1-Dichlor-2,2,2-trifluorethan, 2,2- Dichlor-2-fluorethan und Heptafluorpropan. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsäure, Ricinolsäure und carboxylgruppenhaltige Verbindungen.
   Vorzugsweise Verwendung finden Wasser, Chlordifluormethan, Chlordifluorethane, Dichlorfluorethane, Pentangemische, Cyclohexan und Mischungen aus mindestens zwei dieser Treibmittel, z.B. Mischungen aus Wasser und Cyclohexan, Mischungen aus Chlordifluormethan und 1-Chlor-2,2-difluorethan und gegebenenfalls Wasser.
   Diese Treibmittel werden üblicherweise der Komponente (b) zugesetzt. Sie können jedoch der Isocyanatkomponente (a) oder als Kombination sowohl der Komponente (b) als auch der Isocyanatkomponente (a) oder Vormischungen dieser Komponenten mit den übrigen Aufbaukomponenten zugesetzt werden.
   Die eingesetzte Menge des Treibmittels bzw. der Treibmittelmischung liegt bei 1 bis 25 Gew.-%, vorzugsweise 5 bis 15 Gew.-%, jeweils bezogen auf die Polyolkomponente (b).
   Dient Wasser als Treibmittel, so wird es vorzugsweise der Aufbaukomponente (b) in einer Menge von 0,5 bis 5 Gew.-%, bezogen auf die Aufbaukomponente (b) zugesetzt. Der Wasserzusatz kann in Kombination mit dem Einsatz der anderen beschriebenen Treibmittel erfolgen.
e) Als Katalysatoren (e) zur Herstellung der Polyurethane werden insbesondere Verbindungen verwendet, die die Reaktion der reaktive Wasserstoffatome, insbesondere Hydroxylgruppen, enthaltenden Verbindungen der Komponente (b) und gegebenenfalls (c) mit den organischen, gegebenenfalls modifizierten Polyisocyanaten (a) stark beschleunigen.
   Zweckmäßigerweise verwendet werden basische Polyurethankatalysatoren, beispielsweise tertiäre Amine, wie Triethylamin, Tributylamin, Dimethylbenzylamin, Dicyclohexylmethylamin, Dimethylcyclohexylamin, N,N,N',N'-Tetramethyl-diaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Dimethylpiperazin, N-Dimethylaminoethylpiperidin, 1,2-Dimethylimidazol, 1-Azabicyclo-(2,2,0)-octan, 1,4-Diazabicyclo-(2,2,2)-octan(Dabco) und Alkanolaminverbindungen, wie Triethanolanin, Triisopropanolamin, N-Methyl- und N-Ethyldiethanolamin, Dimethylaminoethanol, 2- (N,N-Dimethylaminoethoxy)ethanol, N,N',N''-Tris-(dialkylaminoalkyl)hexahydrotriazine, z.B. N, N', N''-Tris-(dimethylaminopropyl)-s-hexahydrotriazin, und Triethylendiamin. Geeignet sind jedoch auch Metalisalze, wie Eisen(II)-chlorid, Zinkchlorid, Bleioctoat und vorzugsweise Zinnsalze, wie Zinndioctoat, Zinndiethylhexoat und Dibutylzinndilaurat sowie insbesondere Mischungen aus tertiären Aminen und organischen Zinnsalzen.
   Als Katalysatoren kommen ferner in Betracht: Amidine, wie 2,3-Dimethyl-3,4,5,6-tetrahydropyrimidin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-%, Katalysator bzw. Katalysatorkombination, bezogen auf das Gewicht der Komponente (b).
f) Der Reaktionsmischung zur Herstellung der Polyurethane können gegebenenfalls noch weitere Hilfsmittel und/oder Zusatzstoffe (f) einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.
   Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 5 Gew.-%, bezogen auf 100 Gew.-% der Komponente (b), angewandt.
   Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern.
   Die anorganischen und organischen Füllstoffe können einzeln oder als Gemische verwendet werden und werden der Reaktionsmischung vorteilhafterweise in Mengen von 0,5 bis 50 Gew.%, vorzugsweise 1 bis 40 Gew.%, bezogen auf das Gewicht der Komponenten (a) bis (c), einverleibt, wobei jedoch der Gehalt an Matten, Vliesen und Geweben aus natürlichen und synthetischen Fasern Werte bis 80 Gew.-% erreichen kann.
   Geeignete Flammschutzmittel sind beispielsweise Trikresylphosphat,Tris-(2-chlorethyl)phosphat, Tris-(2-chlorpropyl)phosphat, Tris(1,3-dichlorpropyl)phosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole.
   Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanat-polyadditionsprodukte verwendet werden. Im allgemeinen hat es sich als zweckmäßig erwiesen, 5 bis 50 Gew.-%, vorzugsweise 5 bis 25 Gew.-%, der genannten Flammschutzmittel, bezogen auf die Komponente (b), zu verwenden.
   Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1., 2. und 3. Auflage, 1966, 1983 und 1993, zu entnehmen.

Zur Herstellung der erfindungsgemäßen Polyurethane werden die organischen und/oder modifizierten organischen Di- und/oder Polyisocyanate (a), die erfindungsgemäß einzusetzenden Polyetherpolyole sowie weiteren höhermolekularen Verbindungen mit mindestens zwei reaktiven Wasserstoffatomen (b) und gegebenenfalls Kettenverlängerungs- und/oder Vernetzungsmittel (c) in solchen Mengen zur Umsetzung gebracht, daß das Äquivalenzverhältnis von NCO-Gruppen der Polyisocyanate (a) zur Summe der reaktiven Wasserstoffatome der Komponenten (b) und gegebenenfalls (c) 0,85 bis 1,25:1, vorzugsweise 0,95 bis 1,15:1 und insbesondere 1 bis 1,05:1, beträgt.Falls die Polyurethane zumindest teilweise Isocyanuratgruppen gebunden enthalten, wird üblicherweise ein Verhältnis von NCO-Gruppen der Polyisocyanate (a) zur Summe der reaktiven Wasserstoffatome der Komponente (b) und gegebenenfalls (c) von 1,5 bis 60:1, vorzugsweise 1,5 bis 8:1, angewandt.

Die Polyurethane werden vorteilhafterweise nach dem one shot-Verfahren, beispielsweise mit Hilfe der Hochdruck- oder Niederdruck-Technik in offenen oder geschlossenen Formwerkzeugen, beispielsweise metallischen Formwerkzeugen, hergestellt. Üblich ist auch das kontinuierliche Auftragen des Reaktionsgemisches auf geeigneten Bandstraßen zur Erzeugung von Paneelen.

Als besonders vorteilhaft hat es sich erwiesen, nach dem Zweikomponentenverfahren zu arbeiten und die Aufbaukomponenten (b), (d), (e) und gegebenenfalls (c) und (f) in der Komponente (A) zu vereinigen und als Komponente (B) die organischen und/oder modifizierten organischen Di- und/oder Polyisocyanate (a) oder Mischungen aus den genannten Di- und /oder Polyisocyanaten und gegebenenfalls Treibmittel (d) zu verwenden.

Die Ausgangskomponenten werden bei einer Temperatur von 15 bis 90°C, vorzugsweise von 20 bis 60°C und insbesondere von 20 bis 35°C, gemischt und in das offene oder gegebenenfalls unter erhöhtem Druck in das geschlossene Formwerkzeug eingebracht oder bei einer kontinuierlichen Arbeitsstation auf ein Band, das die Reaktionsmasse aufnimmt, aufgetragen. Die Vermischung kann, wie bereits dargelegt wurde,mechanisch mittels eines Rührers oder einer Rührschnecke durchgeführt werden. Die Formwerkzeugtemperatur beträgt zweckmäßigerweise 20 bis 110°C, vorzugsweise 30 bis 60°C und insbesondere 45 bis 50°C.

Das erfindungsgemaße Verfahren hat den Vorteil, daß durch die genaue Abstimmung der Amine der Diphenylmethanreihe in Kombination mit den weiteren aromatischen Aminen und der Koinitiatoren Polyetherpolyole mit überraschend niedrigen Viskositäten als homogene Mischpolyetherole entstehen.

Die niedere Polyetherolviskosität ermöglicht eine optimale maschinelle Verarbeitung der damit hergestellten Polyurethansysteme. Durch die stufenweise Alkylenoxid-Anlagerung, beginnend ohne oder mit nur sehr geringen Anteilen an katalytisch wirksamen Substanzen, ist es möglich, Aminpolyetherole mit extrem niedrigen Gehalten an reaktiven primären und/oder sekundären Aminogruppen und einer für die gewünschte Anwendung optimalen Molgewichtsverteilung herzustellen. Die hergestellten Polyetherole haben eine ausreichend hohe mittlere Funktionalität und wegen der niederen Eigenreaktivität lassen sich die Fließfähigkeit und die Aushärtung sowohl bei Spritz- und Gießverfahren, als auch in der Doppelbandtechnik mit Nieder- oder Hochdruckmaschinen optimal einstellen.

Die hergestellten Polyurethane haben hervorragende mechanische und physikalische Eigenschaften und sind für die o.g. Einsatzgebiete direkt geeignet.

Die vorzugsweise nach dem erfindungsgemäßen Verfahren hergestellten Polyurethanhartschaumstoffe weisen eine Dichte von 0,02 bis 0,30 g/cm³, vorzugsweise von 0,025 bis 0,24 g/cm³ und insbesondere von 0,03 bis 0,1 g/cm³, auf. Besonders eignen sie sich als Isolationsmaterial im Bau- und Kühlmöbelsektor, z.B. als Dämmplatten, als Zwischenschicht für Sandwichelemente oder zum Ausschäumen von Kühlschrank- und Kühltruhengehäusen. Ebenso können sie zur Rohrisolierung, als Spritz-, Füll- und Montageschaumstoffe sowie als Blockschaumstoffe eingesetzt werden.

Die Erfindung wird in den nachfolgenden Ausführungsbeispielen näher erläutert.

### Beispiel 1 (Vergleichsbeispiel)

In einem 1 l - Autoklaven mit Rührer, Dosiereinrichtungen, Heizung bzw. Kühlung und Druckmeßmöglichkeit wurden 145 g eines Isomerengemisches von Aminen der Diphenylmethanreihe, bestehend aus 50,1 g 2-Kern-, 45,4 g 3-Kern-, 9,7 g 4-Kern- und 39,8 g höherkernigen Anteilen, 80 g Diethylenglykol und 3,5 g einer 48 %igen wäßrigen Kalilauge mit Stickstoff beaufschlagt und mit 510 g Propylenoxid bei 95 bis 125°C und einem Druck, abfallend von 5 bis 1 bar, umgesetzt und 1,5 Stunden einer Nachreaktion bei 110°C unterzogen.

Das alkalische Polyetherol wurde mit Wasser hydrolysiert und mit Phosphorsäure neutralisiert. Anschließend wurde vakuumdestilliert und filtriert.

Das erhaltene Polyetherol hatte folgende Kennzahlen:

| | |
|---|---|
| Hydroxylzahl | 384 mg KOH/g |
| Viskosität bei 25°C | 18420 mPas |

### Beispiel 2 (erfindungsgemäß)

In einem Autoklaven gemäß Beispiel 1 wurden 152 g des erfindungsgemäßen Isomerengemisches der Amine der Diphenylmethanreihe, bestehend aus 64,7 g 2-Kern, 32,1 g 3-Kern-, 15,8 g 4-Kern- und 39,4 g höherkernigen Anteilen, mit einem Zusatz von 0,0052 Gew.-% Anilin und 0,0049 Gew.-% Aminobenzylanilin, jeweils bezogen auf das Gesamtgewicht des o.g. Isomerengemisches, 50 g Diethylenglykol und 3,5 g einer 48 %igen wäßrigen Kalilauge homogenisiert, mit Stickstoff beaufschlagt und mit 200 g Propylenoxid zu einem Vorpolymer mit einer Hydroxylzahl von 642 mg KOH/g umgesetzt.

Anschließend wurden 400 g des erhaltenen Vorpolymers mit 300 g Propylenoxid umgesetzt und das Produkt bei 110°C 1,5 Stunden stabilisiert. Das alkalische Polyetherol wurde mit Wasser hydrolysiert und mit Phosphorsäure neutralisiert. Danach wurde das Produkt vakuumdestilliert und filtriert.

Das erhalten Produkt hatte folgende Kennzahlen:

| | |
|---|---|
| Hydroxylzahl | 381 mg KOH/g |
| Viskosität bei 25°C | 8840 mPas |

### Beispiel 3 (erfindungsgemäß)

In einem Autoklaven gemäß Beispiel 1 wurden 152 g des erfindungsgemäßen Isomerengemisches der Amine der Diphenylmethanreihe gemäß Beispiel 2, 20 g Diethylenglykol und 15 g Toluylendiamin vermischt, mit 0,5 g 48 %iger Kalilauge versetzt, mit Stickstoff beaufschlagt und mit 150 g Propylenoxid umgesetzt.

Es erfolgte eine Nachreaktionsphase von 1 Stunde bei 115°C. Dem Reaktionsgemisch wurden 3,2 g 48 %ige Kalilauge zugegeben. Anschließend wurden weitere 300 g Propylenoxid zudosiert und die Nachreaktion abgewartet.

Das alkalische Polyetherol wurde mit Wasser hydrolysiert und mit Phosphorsäure neutralisiert. Danach wurde das Produkt vakuumdestilliert und filtriert.

Es wurden folgende Kennzahlen gemessen:

| | |
|---|---|
| Hydroxylzahl | 391 mg KOH/g |
| Viskosität bei 25°C | 5370 mPas |

### Beispiel 4 (erfindungsgemäß)

In einem Autoklaven gemäß Beispiel 1 wurden 152 g des erfindungsgemäßen Isomerengemisches der Amine der Diphenylmethanreihe gemäß Beispiel 2, 20 g Diethylenglykol, 0,0075 g Anilin und 0,05 g Toluidin vermischt und mit 150 g Ethylenoxid umgesetzt.

Es erfolgte eine Nachreaktionsphase von 1 Stunde bei 115°C. Dem Reaktionsgemisch wurden 3,5 g 48 %ige Kalilauge zugegeben. Anschließend wurden 300 g Propylenoxid zudosiert und die Nachreaktion abgewartet. Das alkalische Polyetherol wurde mit Wasser hydrolysiert und mit Phosphorsäure neutralisiert. Danach wurde das Produkt vakuumdestilliert und filtriert.

Es wurden folgende Kennzahlen gemessen:

| | |
|---|---|
| Hydroxylzahl | 407 mg KOH/g |
| Viskosität bei 25°C | 6420 mPas |

### Beispiel 5 (Vergleichsbeispiel)

Die Polyol-Komponente, bestehend aus
- 40: Gew.-Teilen eines Polyols auf Basis eines Isomerengemisches von Aminen der Diphenylmethane Reihe, Diethylenglykol, Propylenoxid, OH-Zahl 384 mg KOH/g, aus Beispiel 1,
- 23: Gew.-Teilen eines Polyols auf Basis Saccharose, Glycerin, Propylenoxid, OH-Zahl 490 mg KOH/g,
- 16: Gew.-Teilen eines Polyols auf Basis Saccharose, Glycerin, Propylenoxid, OH-Zahl 440 mg KOH/g,
- 5: Gew.-Teilen eines Polyols auf Basis Propylenglykol, Propylenoxid, OH-Zahl 250 mg KOH/g,
- 2: Gew.-Teilen Silikon-Stabilisator SR 321 (Firma OSi Specialties),
- 2: Gew.-Teilen Dimethylcyclohexylamin,
- 2: Gew.-Teilen Wasser und
- 10: Gew.-Teilen Cyclopentan,
wurde mit

125 Gew.-Teilen MDI-Rohprodukt, NCO-Gehalt 31,5 Masse %, in einem Becher mit einem Vakuum von 1 l intensiv vermischt.

Mit Hilfe einer Universalprüfmaschine wurde nach 3 min ein Bolzen mit einem Durchmesser von 20 mm in den Schaum gedrückt. Die Eindringtiefe betrug 10 mm (Bolzentest). Dieser Test ist geeignet, den Aushärteprozeß zu bestimmten Zeiten exakt zu ermitteln.

Es wurde ein Ergebnis von 12 N ermittelt.

100 g dieses Gemisches wurden unmittelbar nach der Vermischung der Komponenten in einem Endlos-Schlauch aus einer Kunststoffolie mit einem Durchmesser von 4,5 cm gegeben. Der Schlauch wurde einseitig abgeklemmt und die erreichte Schaumlänge in cm als Maß für die Fließfähigkeit genommen (Schlauchtest).

Es wurde ein Ergebnis von 130 cm ermittelt.

### Beispiel 6 (erfindungsgemäß)

Es wurde ein Schaumstoff wie in Beispiel 5 hergestellt, wobei aber 40 Gew.-Teile eines Polyols auf Basis eines Isomerengemisches der Amine der Diphenylmethanreihe, Anilin, Aminobenzylanilin, Diethylenglykol, Propylenoxid, OH-Zahl 381 mg KOH/g, aus Beispiel 2 eingesetzt wurden.

Im Bolzentest wurde nach 3 min ein Ergebnis von 17 N ermittelt und im Schlauchtest ein Ergebnis von 145 cm.

### Beispiel 7 (erfindungsgemäß)

Es wurde ein Schaumstoff wie in Beispiel 5 hergestellt, wobei aber 40 Gew.-Teile eines Polyols auf Basis eines Isomerengemisches der Amine der Diphenylmethanreihe, Toluylendiamin, Diethylenglykol, Propylenoxid, OH-Zahl 391 mg KOH/g, aus Beispiel 3 eingesetzt wurden.

Im Bolzentest wurde nach 3 min ein Ergebnis von 18 N ermittelt und im Schlauchtest ein Ergebnis von 150 cm.

## Patentansprüche

1. Verfahren zur Herstellung von Polyurethanen mit verbesserter Aushartung durch Umsetzung von
a) organischen und/oder modifizierten organischen Di- und/oder Polyisocyanaten mit
b) Polyetherpolyolen auf Basis aromatischer Amine, herstellbar durch Umsetzung spezieller Aminkombinationen und gegebenenfalls weiterer Koinitiatoren in einer stufenweisen Alkylenoxidanlagerung, sowie gegebenenfalls weiteren höhermolekularen Verbindungen mit mindestens zwei reaktiven Wasserstoffatomen und gegebenenfalls
c) Kettenverlängerungs- und/oder Vernetzungsmitteln
in Gegenwart von
d) Treibmitteln,
e) Katalysatoren sowie gegebenenfalls
f) weiteren Hilfsmitteln und/oder Zusatzstoffen,
dadurch gekennzeichnet, daß als spezielle Aminkombination ein Gemisch von Aminen der Diphenylmethanreihe, bestehend aus 5 bis 20 Gew.-% 4-Kern-Amin, 15 bis 30 Gew.-% 3-Kern-Amin, 20 bis 35 Gew.-% Aminen mit mehr als 4 Kernen und 25 bis 50 Gew.-% 2-Kern-Amin, wobei sich die Anteile auf 100 Gew.-% ergänzen, in Kombination mit weiteren aromatischen Aminen eingesetzt wird.

2. Verfahren nach Anspruch 1, dadurch gekennzeichnet, daß das Gemisch von Aminen der Diphenylmethanreihe aus 5 bis 15 Gew.-% 4-Kern-Amin, 15 bis 25 Gew.-% 3-Kern-Amin, 20 bis 30 Gew.-% Aminen mit mehr als 4 Kernen und 40 bis 50 Gew.-% 2-Kern-Amin, wobei sich die Anteile auf 100 Gew.-% ergänzen, besteht.

3. Verfahren nach Anspruch 1 oder 2, dadurch gekennzeichnet, daß die weiteren aromatischen Amine, die in Kombination mit dem Gemisch von Aminen der Diphenylmethanreihe eingesetzt werden, Anilin, Aminobenzylanilin, Toluidin und/oder Toluylendiamin sind.

4. Verfahren nach einem der Ansprüche 1 bis 3, dadurch gekennzeichnet, daß die weiteren aromatischen Amine in einer Menge von 0,01 bis 20 Gew.-%, bezogen auf das Gewicht des verwendeten Gemisches von Aminen der Diphenylmethanreihe, eingesetzt werden.

5. Verfahren nach einem der Ansprüche 1 bis 4, dadurch gekennzeichnet, daß die Alkylenoxidanlagerung in zwei oder mehr Stufen unter Einsatz jeweils steigender Katalysatormengen erfolgt, wobei in der ersten Stufe ohne oder mit geringen Mengen an Katalysator von kleiner als 0,05 Gew.-% und in den folgenden Stufen mit Katalysatormengen von 0,05 bis 0,5 Gew.-%, jeweils berechnet als KOH im Fertigpolyether, gearbeitet wird.

6. Verwendung der nach einem der Ansprüche 1 bis 5 hergestellten Polyurethane als Isolationsmaterial im Bau- und Kühlmöbelsektor.
